# EUROPEAN PATENT APPLICATION

(11) **EP 3 603 887 A1**
(43) Date of publication of application: **05.02.2020**
(21) Application number: 17902222.3
(22) Date of filing: 25.12.2017
(51) Int. Cl.: B25B 11/00

(54) **METHOD AND APPARATUS FOR FLEXIBLE DETECTION AND POSITIONING**

(30) Priority: 23.03.2017 CN 201710177714
(71) Applicant: Shanghai Youhao Automation Technology Co., Ltd., Jiading District Shanghai 201801 (CN)
(72) Inventor: LI, Bo, Shanghai 201814 (CN); TIAN, Cheng, Shanghai 201814 (CN)
(74) Representative: EP&C
(86) International application number: PCT/CN2017/118189
(87) International publication number: WO 2018/171274

(57) **Abstract**

The present invention relates to a method and apparatus for flexible detection and positioning. The apparatus for flexible detection and positioning comprises: at least one XYZ triaxial module capable of moving in an X-axis direction, a Y-axis direction and a Z-axis direction respectively, wherein the X-axis direction, the Y-axis direction and the Z-axis direction are perpendicular to one another, and each XYZ triaxial module is provided with a mounting fixture for mounting a product to be detected onto the XYZ triaxial module; and a controller connected to the XYZ triaxial module to enable the XYZ triaxial module to move to a desired position corresponding to a theoretical position of the product. The present invention can achieve the following beneficial technical effects: achieving flexible positioning and being easy to adjust according to requirements.

## Description

### Technical Field

The present invention relates to a method and apparatus for flexible detection and positioning.

### Background Art

At present, the inspection of large sheet metal parts, stamping parts and welded parts relies on special fixtures for positioning and clamping key points. It is difficult to adjust the fixtures during use and additional detection instruments need to detect the positioning precision of the fixtures. In addition, there is no universality, and only special fixtures can be used for products of different specifications, so that the cost is high.

### Summary of the Invention

An object of the present invention is to provide an apparatus for flexible detection and positioning, which can solve the problems existing in the detection and positioning devices in the prior art, achieves flexible positioning, and is easy to adjust according to requirements.

The above object of the present invention is achieved by means of an apparatus for flexible detection and positioning, comprising:
at least one XYZ triaxial module capable of moving in an X-axis direction, a Y-axis direction and a Z-axis direction respectively, wherein the X-axis direction, the Y-axis direction and the Z-axis direction are perpendicular to one another, and each XYZ triaxial module is provided with a mounting fixture for mounting a product to be detected onto the XYZ triaxial module; and
a controller connected to the XYZ triaxial module to enable the XYZ triaxial module to move to a desired position corresponding to a theoretical position of the product.

According to the above technical solution, the apparatus for flexible detection and positioning of the present invention can achieve the following beneficial technical effects: achieving flexible positioning and being easy to adjust according to requirements.

Preferably, the XYZ triaxial module comprises a gear-and-rack mechanism to enable movement in the X-axis direction and the Y-axis direction.

Preferably, the XYZ triaxial module comprises a lead screw mechanism to enable movement in the Z-axis direction.

Preferably, the apparatus for flexible detection and positioning is divided into a first region and a second region in the Y-axis direction, and the movement of the XYZ triaxial module can be independently controlled in the first region and the second region.

Preferably, the first region and the second region are partially overlapped.

Preferably, each XYZ triaxial module is further provided with an anti-collision sensor for preventing XYZ triaxial modules from colliding with each other.

Preferably, the apparatus for flexible detection and positioning further comprises a memory for storing an actual desired position of the XYZ triaxial module such that the actual desired position can be subsequently directly called.

Preferably, the apparatus for flexible detection and positioning further comprises a real-time position detector for detecting an actual position of the XYZ triaxial module in real time.

The above object of the present invention is further achieved by a method for flexible detection and positioning, comprising:
inputting a theoretical position of a product to be detected into a controller;
according to the theoretical position input into the controller, moving at least one XYZ triaxial module to a desired position corresponding to the theoretical position, wherein the XYZ triaxial module can move in an X-axis direction, a Y-axis direction and a Z-axis direction respectively, and the X-axis direction, the Y-axis direction and the Z-axis direction are perpendicular to one another; and
mounting the product onto a mounting fixture of the XYZ triaxial module.

According to the above technical solution, the method for flexible detection and positioning of the present invention can achieve the following beneficial technical effects: achieving flexible positioning and being easy to adjust according to requirements.

Preferably, the XYZ triaxial module comprises a gear-and-rack mechanism to enable movement in the X-axis direction and the Y-axis direction.

Preferably, the XYZ triaxial module comprises a lead screw mechanism to enable movement in the Z-axis direction.

Preferably, the movement of the XYZ triaxial module can be independently controlled in a first region and a second region which are divided in the Y-axis direction.

Preferably, the first region and the second region are partially overlapped.

Preferably, each XYZ triaxial module is further provided with an anti-collision sensor for preventing XYZ triaxial modules from colliding with each other.

Preferably, the flexible detection and positioning method further comprises storing an actual desired position of the XYZ triaxial module such that the actual desired position can be subsequently directly called.

Preferably, the method for flexible detection and positioning further comprises detecting an actual position of the XYZ triaxial module in real time.

### Brief Description of the Drawings

Fig. 1 is a top view of an apparatus for flexible detection and positioning of an embodiment of the present invention.
Fig. 2 is a perspective view of an apparatus for flexible detection and positioning of an embodiment of the present invention.

### List of reference signs

1. XYZ triaxial module
2. Mounting fixture

### Detailed Description of Embodiments

The specific embodiments of the present invention will be described below. It should be pointed out that in the detailed description of these embodiments, it is not possible for this description to describe in detail all the features of the actual embodiments for the sake of brevity and simplicity of description. It should be understood that in the actual implementation of any one embodiment, as in the course of any engineering project or design project, in order to achieve the developer's specific objectives and meet system-related or business-related constraints, a variety of specific decisions are often made, and thus any change may occur from one embodiment to another. Moreover, it is also understandable that although the efforts made during such development may be complex and lengthy, for those of ordinary skill in the art related to the disclosure of the present invention, some changes in design, manufacturing or production based on the technical content disclosed in the present disclosure are only conventional technical means, and it should not be understood that the content of the present disclosure is insufficient.

Unless otherwise defined, the technical terms or scientific terms as used in the claims and the description should be construed in a generic meaning as understood by those of ordinary skill in the art to which the present invention pertains. The words "first", "second" or the like as used in the description and claims of the patent application of the present invention do not denote any order, quantity, or importance, but are merely used to distinguish different components. The words "a", "an" or the like do not denote a quantity limitation, but mean that there is at least one. The words "include", "comprise" or the like mean that the elements or objects that precede "include" or "comprise" encompass the elements or objects and their equivalents that appear after "include" or "comprise" and do not exclude other elements or objects. The words "connect", "connected" or the like are not limited to physical or mechanical connections, nor are they limited to direct or indirect connections.

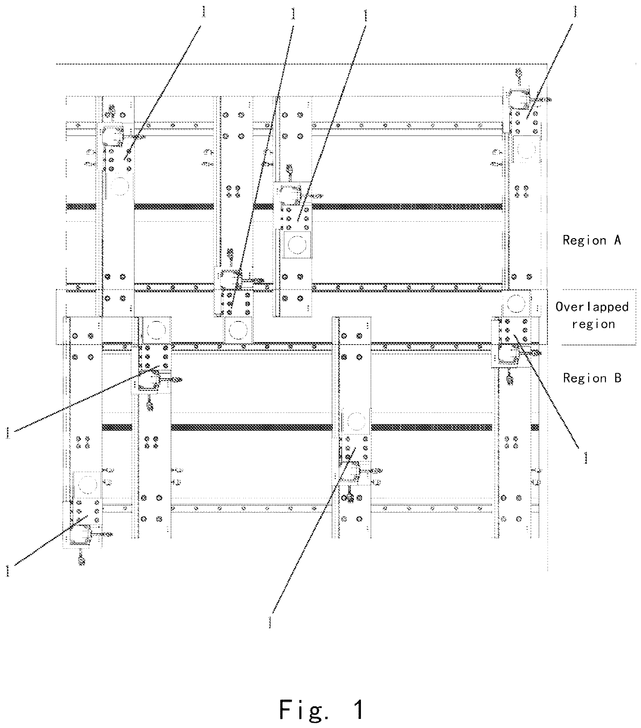

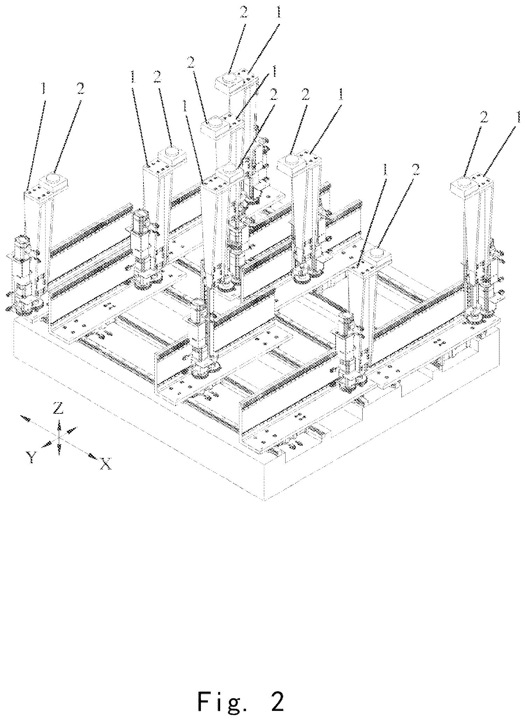

Fig. 1 is a top view of an apparatus for flexible detection and positioning of an embodiment of the present invention. Fig. 2 is a perspective view of an apparatus for flexible detection and positioning of an embodiment of the present invention.

As shown in Figs. 1 and 2, according to an embodiment of the present invention, an apparatus for flexible detection and positioning comprises:
at least one XYZ triaxial module 1 (eight XYZ triaxial modules being shown in Figs. 1 and 2), the XYZ triaxial module 1 being capable of moving in an X-axis direction, a Y-axis direction and a Z-axis direction respectively, wherein the X-axis direction, the Y-axis direction and the Z-axis direction are perpendicular to one another, and each XYZ triaxial module 1 is provided with a mounting fixture 2 for mounting a product to be detected onto the XYZ triaxial module 1; and
a controller connected to the XYZ triaxial module 1 to enable the XYZ triaxial module 1 to move to a desired position corresponding to a theoretical position of the product.

In this way, the apparatus for flexible detection and positioning of the present invention can achieve flexible positioning and is easy to adjust according to requirements.

Specifically, the present invention uses an XYZ triaxial module, which can automatically move to a pre-set desired position according to the input of the controller, and can be finely adjusted according to requirements to achieve flexible positioning, so that all points (i.e., positions where the mounting fixtures of the XYZ triaxial modules are located) can be automatically adjusted and automatically reset.

Preferably, the XYZ triaxial module comprises a gear-and-rack mechanism to enable movement in the X-axis direction and the Y-axis direction. Certainly, on the basis of the content disclosed in the present invention, it would have been appreciated by those skilled in the art that other mechanisms, such as a lead screw and a linear motor, may also be used, and such variations also fall within the scope of protection of the present invention. In the case where the XYZ triaxial module comprises a gear-and-rack mechanism to enable movement in the X-axis direction and the Y-axis direction, the apparatus for flexible detection and positioning of the present invention has a certain expandability, that is, using a common rack in combination with independent gears to drive the movement in the X-axis direction and the Y-axis direction, so that when the number of positioning points increases or decreases, it only needs to directly increase or decrease the number of the corresponding XYZ triaxial modules without influencing the whole machine space.

Preferably, the XYZ triaxial module comprises a lead screw mechanism to enable movement in the Z-axis direction. Certainly, on the basis of the content disclosed in the present invention, it would have been appreciated by those skilled in the art that other mechanisms, such as a gear and a rack and a linear motor, may also be used, and such variations also fall within the scope of protection of the present invention. In the case where the XYZ triaxial module comprises a lead screw mechanism to enable movement in the Z-axis direction, the precision of movement in the Z-axis direction is effectively improved, and accidental dropping can be easily prevented.

Preferably, the apparatus for flexible detection and positioning is divided into a first region and a second region (e.g., a region A and a region B as shown in Fig. 1) in the Y-axis direction, and the movement of the XYZ triaxial module can be independently controlled in the first region and the second region. Certainly, on the basis of the content disclosed in the present invention, it would have been appreciated by those skilled in the art that more regions can be divided, and such variations also fall within the scope of protection of the present invention.

Preferably, the first region and the second region are partially overlapped (e.g., an overlapped region as shown in Fig. 1). In this way, the mounting fixture of the XYZ triaxial module covers the entire range of motion without blind zones.

Preferably, each XYZ triaxial module is further provided with an anti-collision sensor for preventing XYZ triaxial modules from colliding with each other.

Preferably, the apparatus for flexible detection and positioning further comprises a memory for storing an actual desired position of the XYZ triaxial module such that the actual desired position can be subsequently directly called. That is to say, after the XYZ triaxial module 1 moves to a desired position corresponding to a theoretical position of a product to be detected, the desired position can be finely adjusted (optionally), the finely adjusted desired position is an actual desired position, and the actual desired position can be subsequently directly called, to directly drive the XYZ triaxial module into position.

Preferably, the apparatus for flexible detection and positioning further comprises a real-time position detector for detecting an actual position of the XYZ triaxial module in real time, for example, for detecting an actual position of a positioning point of the XYZ triaxial module (i.e., the position where the mounting fixture of the XYZ triaxial module is located), thereby further improving the positioning precision and preventing motion interference between the XYZ triaxial modules.

Preferably, a servo motor may be used to drive the movement of the XYZ triaxial module. Certainly, on the basis of the content disclosed in the present invention, it would have been appreciated by those skilled in the art that other motors, such as a stepper motor, may also be used, and such variations also fall within the scope of protection of the present invention.

Preferably, eight XYZ triaxial modules are shown in Figs. 1 and 2. Certainly, on the basis of the content disclosed in the present invention, it would have been appreciated by those skilled in the art that more or less XYZ triaxial modules may be used, and such variations also fall within the scope of protection of the present invention.

Preferably, a correction curve may be used to correct uncontrollable errors during the movement to improve the movement precision.

As shown in Figs. 1 and 2, according to an embodiment, a method for flexible detection and positioning comprises:
inputting a theoretical position of a product to be detected into a controller;
according to the theoretical position input into the controller, moving at least one XYZ triaxial module 1 to a desired position corresponding to the theoretical position, wherein the XYZ triaxial module 1 can move in an X-axis direction, a Y-axis direction and a Z-axis direction respectively, and the X-axis direction, the Y-axis direction and the Z-axis direction are perpendicular to one another; and
mounting the product onto a mounting fixture 2 of the XYZ triaxial module 1.

In this way, the method for flexible detection and positioning of the present invention can achieve flexible positioning and is easy to adjust according to requirements.

Preferably, the method for flexible detection and positioning further comprises storing an actual desired position of the XYZ triaxial module such that the actual desired position can be subsequently directly called.

After the product to be detected is mounted on the mounting fixture 2 of the XYZ triaxial module 1, a detection instrument may be used to inspect whether the product meets the requirements; the product after detection is removed; the XYZ triaxial module returns to the origin; and when in use again, the actual desired position is called to directly drive the XYZ triaxial module to move into position.

Preferably, the method for flexible detection and positioning further comprises detecting an actual position of the XYZ triaxial module in real time.

The specific implementations of the present invention are described above. However, it would be understood by those skilled in the art that the above specific implementations do not constitute the limitations on the present invention, and those skilled in the art may make various modifications on the basis of the above disclosure without departing from the scope of the present invention.

## Claims

1. An apparatus for flexible detection and positioning, comprising:
at least one XYZ triaxial module capable of moving in an X-axis direction, a Y-axis direction and a Z-axis direction respectively, wherein the X-axis direction, the Y-axis direction and the Z-axis direction are perpendicular to one another, and each XYZ triaxial module is provided with a mounting fixture for mounting a product to be detected onto the XYZ triaxial module; and
a controller connected to the XYZ triaxial module to enable the XYZ triaxial module to move to a desired position corresponding to a theoretical position of the product.

2. The apparatus for flexible detection and positioning of claim 1, wherein the XYZ triaxial module comprises a gear-and-rack mechanism to enable movement in the X-axis direction and the Y-axis direction.

3. The apparatus for flexible detection and positioning of claim 1, wherein the XYZ triaxial module comprises a lead screw mechanism to enable movement in the Z-axis direction.

4. The apparatus for flexible detection and positioning of claim 1, wherein the apparatus for flexible detection and positioning is divided into a first region and a second region in the Y-axis direction, and the movement of the XYZ triaxial module can be independently controlled in the first region and the second region.

5. The apparatus for flexible detection and positioning of claim 4, wherein the first region and the second region are partially overlapped.

6. The apparatus for flexible detection and positioning of claim 1, wherein each XYZ triaxial module is further provided with an anti-collision sensor for preventing XYZ triaxial modules from colliding with each other.

7. The apparatus for flexible detection and positioning of claim 1, further comprising a memory for storing an actual desired position of the XYZ triaxial module such that the actual desired position can be subsequently directly called.

8. The apparatus for flexible detection and positioning of claim 1, further comprising a real-time position detector for detecting an actual position of the XYZ triaxial module in real time.

9. A method for flexible detection and positioning, comprising:
inputting a theoretical position of a product to be detected into a controller;
according to the theoretical position input into the controller, moving at least one XYZ triaxial module to a desired position corresponding to the theoretical position, wherein the XYZ triaxial module can move in an X-axis direction, a Y-axis direction and a Z-axis direction respectively, and the X-axis direction, the Y-axis direction and the Z-axis direction are perpendicular to one another; and
mounting the product onto a mounting fixture of the XYZ triaxial module.

10. The method for flexible detection and positioning of claim 9, wherein the XYZ triaxial module comprises a gear-and-rack mechanism to enable movement in the X-axis direction and the Y-axis direction.

11. The method for flexible detection and positioning of claim 9, wherein the XYZ triaxial module comprises a lead screw mechanism to enable movement in the Z-axis direction.

12. The method for flexible detection and positioning of claim 9, wherein the movement of the XYZ triaxial module can be independently controlled in a first region and a second region which are divided in the Y-axis direction.

13. The method for flexible detection and positioning of claim 12, wherein the first region and the second region are partially overlapped.

14. The method for flexible detection and positioning of claim 9, wherein each XYZ triaxial module is further provided with an anti-collision sensor for preventing XYZ triaxial modules from colliding with each other.

15. The method for flexible detection and positioning of claim 9, further comprising storing an actual desired position of the XYZ triaxial module such that the actual desired position can be subsequently directly called.

16. The method for flexible detection and positioning of claim 9, further comprising detecting an actual position of the XYZ triaxial module in real time.
